# EUROPEAN PATENT SPECIFICATION

(11) **EP 2 914 550 B1**
(45) Date of publication and mention of the grant of the patent: **04.05.2016**
(21) Application number: 13774695.4
(22) Date of filing: 14.10.2013
(51) Int. Cl.: C02F 1/50, B01D 39/20, C02F 1/28

(54) **FILTER MEDIUM CONTAINING FIBRES**
FILTERMEDIUM ENTHALTEND FASERN
MILIEU FILTRANT CONTENANT DES FIBRES

(30) Priority: 01.11.2012 EP 12190931
(43) Date of publication of application: 09.09.2015
(73) Proprietor: Unilever N.V., 3013 AL Rotterdam (NL); Unilever PLC, London, Greater London EC4Y 0DY (GB)
(72) Inventor: CHATTERJEE, Jaideep, Bangalore 560 066 (IN); GUPTA, Santosh Kumar, Bangalore 560 066 (IN); MATTATHIL SUKUMARAN, Suma, Bangalore 560 066 (IN); RAMACHANDRAN, Rajeesh, Kumar, Bangalore 560 066 (IN)
(74) Representative: van den Brom, Coenraad Richard
(86) International application number: PCT/EP2013/071411
(87) International publication number: WO 2014/067771

(56) References cited:
- US-A- 5 443 735
- US-A1- 2005 121 387
- US-A1- 2007 045 176

## Description

### Field of the invention

The present invention relates to filter medium containing fibres of a metal or its alloy thereof especially for purification of water.

### Background of the invention

Various types of filter media are used for purification of water. These include particulate media like powdered or granular activated carbon, diatomaceous earth, activated alumina, sand and zeolites. Such particulate media is generally used in a free state (unbound state) but bound filter blocks are more common. When in unbound state, a filter medium is usually packed in a flow-through container. Bound blocks are usually made by using a binder.

Most particulate filters perform on the principle of size exclusion. Such filters are generally good at removing suspended particles of dirt.

However contaminated water also contains microbes such as cysts, bacteria and virus. A term known as "log removal" or "log reduction" is usually associated with water purifiers. Removal of microbes is customarily expressed as log removal which is calculated as log removal = log₁₀ (input concentration/output concentration). This log-reduction terminology was developed by engineers to express levels of decreased biological contamination in water by factors of 10 that could be easily converted to percent reduction. The most commonly used logarithmic base is 10 because it is compatible with the base-10 decimal system. The log of 10 in the base 10 logarithmic system is 1 and the log of 100 is 2, with the log of 1000 being 3 as so on. A 1-log reduction is nine out of 10 and would be equivalent to a 90 percent reduction. A 2-log reduction would be 99 out of 100 or 99 percent reduction and a 3-log reduction would be 999 out of 1000 or 99.9 percent reduction. A 99.99 percent reduction would be called a 4-log reduction.

Most filter media *per-se* may not remove or deactivate microorganisms, especially some bacteria and virus. For this reason, it is customary mix or to generate *in-situ* a particulate metal or metallic compound having some antimicrobial activity on a filter medium. Suitable examples include silver and silver chloride. Bound carbon blocks having nano-particulate silver or other silver compounds are known. Carbon blocks having copper or zinc and compounds thereof are also known.

A typical limitation of particulate metals is that it is generally difficult to effectively bind such particles. Unbound particles can find their way into purified water. Such water may not be safe to drink.

US5443735A (Pall Corporation, 1995) discloses a method for preventing microorganism growth on sorbent media such as bound activated carbon. Brass particles are used for this purpose and the disclosed maximum leach is 1 ppm copper and 5 ppm zinc. In this method, water to be treated is passed over brass particles prior to or concurrently with contacting the sorbent. Diameter of the particles of brass is said to be from 250 µm to 45 µm and the average particle size of the brass particles is from about one-fourth to about four times the average particle size of the sorbent particles (filter media). It has been disclosed that if brass particles are only physically mixed with granular activated carbon, the abrasive nature of the brass particles causes mutual physical attrition of the brass particles as well as of the carbon thereby generating undesirable "fines" or small particles that clog the filters and drastically lower the flow of water due to increased resistance caused by the presence of the fines.

Further, it is said that attrition may be so severe that the particle size of some of the brass may be reduced to such an extent that the brass particles may pass through the purification system and into the user's water supply, undesirably increasing the metal content of the filtered water.

WO2005/056151 A2 (Access Business Group International LLC) discloses a bacteriostatic water filter made of activated carbon, copper particles and a binder, with or without silver coated activated carbon. The copper particles are said to inhibit any growth of naturally occurring heterotrophic plate count ("HPC") bacteria on or within the filter.

US 2007/0045176 (Noble Fibre Technologies, LLC) discloses a filter membrane formed from a filter medium and one or more metallic threads incorporated with the filter membrane for antimicrobial properties. The metallic threads may be formed from silver, copper, and zinc. The metallic threads may be wrapped around or incorporated within the material forming the filter membrane. The application discloses that the metallic thread may be wrapped around the outside of a cartridge style filter body to kill bacteria and other organisms from the air or fluid, such as water, flowing through the filter. The application discloses threads such as those of silver which may be formed from a silver coated nylon material which have length in the broad range from 0.5 to 8 inches. 'Threads' used in the application are of complex nature and are different from fibres as the threads are made of a metal coated on a carrier fibre. Further, 'threads' of the application are physically attached, wrapped on the filter body and there is no composite involvement of the threads with the filter body.
We have determined that at least some of the problems of prior art can be solved by using fibres of a metal or an alloy having oligodynamic effect rather than particles thereof.

### Summary of the invention

Thus, in accordance with a first aspect, disclosed is a filter for purification of water having:
(i) a filter medium comprising particulate material; and,
(ii) a metal or an alloy thereof which has oligodynamic effect;
wherein the metal or alloy thereof is in form of fibres and wherein aspect ratio of said fibres is in range of 3:1 to 200:1.

In accordance with a second aspect, disclosed is use of a filter of the first aspect for purification of water.

In accordance with a third aspect disclosed is a water purification device having a filter of the first aspect.

Another aspect of the present invention discloses a process for preparation of a filter comprising the steps of:
(i) intimately mixing a filter medium comprising particulate material with a metal or an alloy thereof which has oligodynamic effect and which is in form of fibres and the aspect ratio of said fibres in the range of 3:1 to 200:1 and a binder to form a mix;
(ii) compacting said mix in a vibratory compactor;
(iii) further compacting said mix in a mould of desired shape and size by applying pressure of not more 20 kg/cm²;
(iv) heating said mould to a selected temperature range; and,
(v) cooling said mould to release filter.

The invention will now be explained in details.

### Detailed description of the invention

In a first aspect, disclosed is a filter for purification of water having:
(i) a filter medium comprising particulate material; and,
(ii) a metal or an alloy thereof which has oligodynamic effect;
wherein the metal or an alloy thereof is in form of fibres and wherein aspect ratio of said fibres is in the range of 3:1 to 200:1.

### The filter medium

The filter medium is the medium which provides for removal of particulate contaminants. Accordingly any granular or particulate material can be used.

The filter medium is preferably selected from activated carbon, diatomaceous earth, sand, clay, activated alumina or ceramic. More preferred particles are sand or activated carbon and most preferred is activated carbon.

Preferred activated carbon particles are obtained from bituminous coal, coconut shell, wood or petroleum tar. It is preferred that surface area of the activated carbon particles is greater than 500 m²/g, more preferably greater than 1000 m²/g. The activated carbon can be of two grades; a coarser granular activated carbon (GAC) and a finer powdered activated carbon (PAC). An intermediate grade is also available. This is known as IAC.

A powdered activated carbon (PAC) of selected particle size distribution is preferred over other forms. Preferably 95 % of the particles of PAC pass through standard 50 mesh, more preferably through standard 60 mesh. It is also preferred that not more than 13%, preferably not more than 12 % particles pass through 325 mesh. It is preferred that size uniformity coefficient of the particles of activated carbon is less than 2, more preferably less than 1.5. Particles of activated carbon having carbon tetrachloride number exceeding 50%, more preferably exceeding 60 % are preferred.

It is preferred that iodine number of such particles is greater than 800 units, more preferably greater than 1000 units.

### The fibres

The disclosed filter has a metal or an alloy thereof where the metal or the alloy has oligodynamic effect. The metal or the alloy thereof is in the form of fibres. Oligodynamic effect (also called as oligodynamic action) is the effect of inhibiting, or killing micro-organisms by the use of very small amounts of a chemical substance. Several metals exhibit such an effect. The list includes lead, bismuth and mercury. However, it is preferred that the metal is selected from silver, copper, zinc, gold or aluminium. All these metals can be used for water purification.

Copper is said to exert its toxicity on microorganisms through several parallel mechanisms (cell membrane damage, protein damage, nucleic acid interaction), which eventually may lead to the microorganism's death.

When particulate form of metal or alloy having oligodynamic effect, e.g. copper or its alloy such as brass is used for making filters, especially bound (sintered) filters, the fine sized particles are difficult to bind. In such a case, the loosely bound particles may find their way in purified water.

This technical problem is overcome by using fibres instead of particulate or granular form. Without wishing to be bound by theory it is believed that peculiar shape of fibres with its typical aspect ratio provides better retention and binding (wherever a binder is used) inside the filter matrix. Without wishing to be bound by theory it is also believed that the shape of the fibres provide better antimicrobial action.

Every fibre has an aspect ratio which is defined as ratio between its average length to its average diameter. Disclosed fibre has an aspect ratio of 3:1 to 200:1. It is particularly preferred that aspect ratio of fibre is in the range of 3:1 to 65:1 and most preferably 3:1 to 25:1.

It is further preferred that the surface of the fibres is serrated. A serrated surface which provides a roughened appearance is believed to better at retention or trapping of microbes as compared to fibres having comparatively smoother surface. Scanning Electron Microscopy can be used for studying the surface morphology.

Fibres can also be characterized by their mesh size which can be determined by following a standard ASTM method. It is preferred that the ASTM mesh size of the fibres is in the range of -10 to +270. This is roughly equivalent to 2057 µm and 53 µm. A preferred range is -18 to +200. The most preferred range is -18 to +120.

It is preferred that average length of fibres is in the range of 0.1 mm to 10 mm, more preferably in the range of 0.1 mm to 5 mm and most preferably in the range of 0.5 mm to 3 mm. Without wishing to be bound by theory it is believed that decreasing fibre length provides more leach of metal which aids antimicrobial action.

A preferred filter has 1 wt% to 99 wt% filter medium and 99 wt% to 1 wt% metal or said alloy. Such two-component filters are devoid of any binder. In such a case the filter will be in the form of a flow-through container having the filter medium and the metal or alloy. Further preferred filters have 5 wt% to 75 wt% fibres, more preferably 8 wt% to 50 wt%, further more preferably 8 wt% to 40 wt% and optimally 8 wt% to 35 w% fibres.

A particularly preferred metal is copper. True density of metallic copper is 8.7 g/cm³ to 8.9 g/cm³. Similarly, true density of brass is generally in the range of 8.4 g/cm³ To 8.7 g/cm³. True density is defined as the ratio of its mass to its true volume. This term is generally used in the context of solids.

The term apparent density is generally used in the context of powders, particles or granules and which can be determined by the ratio of the mass to a given volume. The apparent density of copper particles is 2 g/cm³ to 2.7 g/cm³ and that of brass particles is 2 g/cm³ to 4 g/cm³.

On the other hand, fibres have much lower apparent density. It is preferred that apparent density of copper fibres is in the range of 1.1 g/cm³ to.2.5 g/cm³.

A preferred alloy is brass or bronze. Both the alloys *per-se* are well known. Brass is particularly preferred. The term "brass" is used herein to indicate a copper-zinc alloy in general and that such alloy can contain other constituents and/or be commonly denominated by different nomenclature. It is further preferred that copper content in brass or bronze is 50% to 90% and the zinc content is 50 wt% to 10 wt%. More preferably, the brass fibres contain 80 wt% to 85 wt% copper and 15 wt% to 20 wt% zinc. Most preferably the brass fibres contain 60 wt% to 70 wt% copper and 30 wt% to 40 wt% zinc. It is also preferred that the fibres of brass or bronze are pre-washed with a dilute mineral acid such as dil.HCL. This is to cleanse the surface of fibres of contaminants such as iron filings or other foreign matter which might interfere with the in-use activity of fibres.

It is preferred especially in the case of brass or bronze that purity of copper is at least 90%, more preferably at least 95%, still more preferably at least 99 % and optimally at least 99.9%. High purity material is always preferred in the context of purification for drinking purpose. Copper may contain traces of lead as impurity and the WHO prescribed limit for lead in drinking water is 10 ppb. Therefore, high purity copper is preferred.

In the case of brass it is preferred that apparent density of fibres is 1.2 g/cm³ to 2.5 g/cm³. It is believed that an increase in the content of metal/alloy in particulate form reduces porosity of the filter. On the other hand, an equivalent increase in fibre content does not adversely affect porosity. As porosity is directly linked to filtration, high porosity is desired. This further explains the preference for fibres over particles.

Copper and brass fibres are freely available. A preferred supplier is Sarda Industrial Enterprises (India); and a preferred grade is fine grade, fibrous shape.

### Binder

It is preferred that the filter is a bound or a sintered filter. In such a case, addition of a binder becomes necessary. Selection of the binder depends upon several variables but the most important factor is the nature and the type of filter medium.

Accordingly a range of binders can be used.

Binders are substances that bind the particles of the filter medium to hold them together. Suitable binders include polymers like polyethylene resin and inorganic substances like white cement. Polymeric binders are more preferred. A preferred binder is one which has surface coverage of 0.5% to 10%. A hydrophilic binder is preferred. Preferably the binder is a thermoplastic polymer. Suitable examples include ultra high molecular weight polymers, particularly polyethylene and polypropylene. Binders of this class are commercially available under the trade names HOSTALENT™ (from Ticona GmbH), GUR™, Sunfine™ (from Asahi), Hizex™ (from Mitsubishi) 5 and from Brasken Corp (Brazil). Other suitable binders include low density polyethylene (LDPE) sold as Lupolen™ (from Basel Polyolefins) and linear low density polyethylene (LLDPE) from Qunos (Australia).

Bulk density of the binder is preferably not more than 2.5 g/cm³, more preferably less than 0.6 g/cm³ and particularly less than or equal to 0.5 g/cm³ and further particularly less than 0.25 g/cm³. It is preferred that particle size distribution of the binder is similar to that of the selected filter medium.

It is preferred that the amount of particles passing 200 mesh size is preferably less than 40 wt%, more preferably less than 30 wt%. It is preferred that Melt Flow Rate (MFR) of the binder, e.g. polyethylene is less than 5 g/10 minutes, preferably less than 2 g/10 minutes, more preferably less than 1 g/10 minutes.

In the case of bound filters, it is preferred that ratio of the binder to the filter medium varies in the range from 1:1 to 1:20, more preferably in the range from 1:3 to 1:9.

Preferred (bound) filters have 1 wt% to 50 wt% binder.

### Size and dimensions of bound filters

The size and dimensions of bound filters can vary depending on the intended use such as on the dimensions of any filter device. The bound filter can be of any desired shape and size.

Suitable shapes include a flat circular disc of low thickness, square disc of low thickness, low height tapered flat disc, cylinder, dome, annular cylinder solid cone, hollow cone, frusto-conical shape, and solid or hollow hemispherical shape. The annular cylindrical shape is more preferred. It is preferred that the shortest path length across the bound block i.e. the shortest distance from the point of entry of water to the point of exit for water where the water exits the bound block varying in the range from 5 to 50 mm, more preferably ranging from 10 to 30 mm.

### Other metals

In addition to copper or its alloy in fibre form, the disclosed filter preferably also includes a metal or an alloy thereof having oligodynamic effect wherein the metal or alloy is other than in fibre form. This is for an enhanced antimicrobial efficacy and most preferably the metal is impregnated onto the filter medium. Such additional metals can be in particulate form. Other preferred forms include nano-particulate form. Silver and Zinc are particularly preferred. However, silver is the most preferred metal.

It is believed that silver acts synergistically with copper or brass fibres, particularly copper fibres. It has been found that silver and copper (or brass) in fibre form act synergistically to provide superior log reduction. It is particularly preferred that the filter contains a silver, preferably in salt form, more preferably silver halide and especially silver bromide, at a level equivalent to 1 % metallic silver loading on the particles. Such silver impregnated filter media are available. Alternatively the particles can also be made in-house.

### Process for making filters

The filters made in accordance with the disclosed invention can either be bound or unbound.

Bound filters are made by using a binder as described earlier.

Unbound filters are generally made by mixing a filter medium and a metal or an alloy thereof which has oligodynamic effect wherein the metal or the alloy thereof is in the form of fibres. In such cases, as the filter is devoid of any binder, the mixture of filter medium and the fibres, for use, is packed in a flow-through container which is provided with inlet and outlet for water, generally in the form of mesh.

In accordance with another aspect is disclosed a process for preparation of a bound filter comprising the steps of:
(i) intimately mixing a filter medium comprising particulate material with a metal or an alloy thereof which has oligodynamic effect and which is in the form of fibres with aspect ratio of said fibres in the range of 3:1 to 200:1 and a binder to form a mix;
(ii) compacting the mix in a vibratory compactor
(iii) further compacting the mix in a mould of desired shape and size by applying pressure of not more 20 kg/cm²;
(iv) heating the mould to a selected temperature range; and,
(v) cooling the mould to release the filter.

For the step of mixing the filter medium and the binder any low shear mixer that does not significantly alter the particle size distribution is suitable, such as a mixer with dulled impeller blades, ribbon blender, rotary mixer. The mixing is carried out to prepare a uniform mix of the filter medium and the binder and is preferably carried out for at least 15 minutes, more preferably 20 to 60 minutes. Compaction of the mix is carried out in a vibratory compactor to obtain the desired particle size distribution profile across the height of the filter block. The vibratory compaction is preferably carried out in a vibrator at frequency in the range of 30 to 100 Hz. This process step is preferably carried out for a period of at least one minute, more preferably for three to thirty minutes.

The compacted mass is then placed in a mould of a pre-selected size and shape and subjected to a pressure of not more than 20 kg/cm², preferably not more than 10 kg/cm². The pressure is preferably applied using either a hydraulic press or a pneumatic press, more preferably a hydraulic press. The mould is made from aluminum, cast iron, steel or any suitable material capable of withstanding temperatures exceeding 400°C. A mould release agent is preferably coated on the inside surface of the mould. The mould release agent is preferably selected from either silicone oil, aluminum foil or any other commercially available mould release agent that has little or no adsorption onto activated carbon or the binder material.

The mould is then heated to 150 °C to 400°C, preferably in the range of 180 °C to 320°C, depending on the binder material that is used. The mould is kept heated for 60 minutes, preferably between 90 minutes and 300 minutes depending on the size and the shape of the mold, and sufficient to ensure uniform heating of the contents of the mould. The mould is preferably heated in an oven such as a non-convection, forced air or forced inert-gas convection oven. The mould is then cooled and the carbon block released from the mould.

### Use of the filter

In accordance with another aspect disclosed is use of a filter of the first aspect for purification of water.

### Device

In accordance with another aspect disclosed is a water purification device having a filter of the first aspect. Basic construction of preferred devices may be found in prior published patents issued to Unilever.

In order to make the disclosed filter better suited for use in a water purification device, it is preferred that the bound filter is attached to a base plate with an orifice for the water exit and additionally has a detachable cover. The base plate is preferably made of plastic such as polypropylene, polyethylene, ABS, SAN. The detachable cover is preferably also made of polypropylene, polyethylene, ABS, SAN.

### Additional sediment filters:

In addition to the disclosed filter, in a typical water purification device, it is customary to use additional sediment filters. Such an additional sediment filter prolongs the life of bound filters such as carbon block filters.

Such additional filters are usually washable or replaceable and are preferably made of woven or non-woven fabric, more preferably non-woven fabric having micropores. The sediment filter is used as a pre-filter having pore size which is meant to retain particles generally above 3 µm. The sediment filter can be washed and rinsed under flowing water or by using a small amount (0.1 to 10 g/litre) of detergent in water. This use of the sediment filter facilitates wide and extensive application of the disclosed filter by preventing the filter medium from choking.

The sediment filter is preferably moulded separately by using a woven or non-woven fabric of thickness in the range of 1 mm to 10 mm and preferably in the range of 2 mm to 6 mm. The most preferred shape of the filter is hemispherical and the fabric used to cover the moulded filter is cut into a circle with diameter such that the area of the fabric is equivalent to 10% to 50%, more preferably 10% to 20% over the surface area of the filter which is required to be covered by the fabric. The ratio of the fabric to the size of the filter for other shapes is suitably altered so that the coverage is perfect and the fabric and the moulded filter have nearly identical shape and size.

Multiple sediment filters can also be used. Preferably a bound filter is enveloped with spirally wound layer of non-pleated fabric enveloped with spirally wound layer of pleated fabric.

The invention will now be explained in more details with the help of non-limiting examples.

### Examples

### Example-1: Preparation of filter made of activated carbon and copper fibres (filter-1)

About 165 g powdered activated carbon supplied by Active Carbon Limited India, having average particle size in the range of 75 µm to 250 µm with preimpregnated thereon silver (equivalent to 1% metallic silver loading) was mixed with 99 g water in a container to prepare a moist mixture. Thereafter 33 g of polyethylene binder (GUR 2122 ex. Ticona GmbH) was added and the contents were mixed thoroughly to get a homogeneous mixture. Eighty two (82) g copper fibres having diameter ranging from 120 µm to 850 µm (equivalent to mesh size of -18 to +120) and length ranging from 0.1 mm to 3 mm and aspect ratio ranging from 3:1 to 25:1 was used for this experiment. The surface of the copper fibres was serrated. Purity of copper was 99.9 % with the apparent density of fibres being in the range of 1.2 to 2.5 gm/cm³. The fibres were slowly mixed with the mixture to get a uniform dispersion. Then the dispersion was transferred to a stainless steel hemispherical mould having 12 cm diameter and a hemispherical insert of 4 cm diameter to create a path length of 4 cm in the moulded filter. After putting the top lid in place, the mould was compressed at 10 to 15 kg/cm² pressure with the help of hydraulic press and then it was kept inside an oven at 250°C for 150 minutes. When the mould cooled to room temperature the moulded filter was released.

Thereafter, for use in a water purification device, the moulded filter was attached to a plastic base plate having an orifice for exit of water and was used for conducting experiments as discussed hereinafter.

### Example-2: Preparation of filter made of activated carbon and brass fibres (filter-2)

For making a moulded filter containing brass fibres, the process as described above was repeated using brass fibres instead of copper fibres. The diameter of brass fibres ranged from 0.12 mm to 1 mm (equivalent to mesh size of -16 to +120), the length was from 0.1 µm to 3 µm and aspect ratio was in the range of 3:1 to 25:1. The surface of the brass fibres was serrated and contents of copper and zinc was 68% copper and 32% zinc (copper purity 99.9%). The apparent density of brass fibres was in the range of 1.5 to 2.5 g/cm³. The filter prepared by this process was called as filter-2.

A comparative block was made without any copper or brass fibres; all other ingredients and conditions being as described earlier (comparative filter).

### Example-3: Effect of copper and brass fibres on log-removal

Each filter described above was fitted inside a standard gravity fed water purifier and nine litres of test water whose composition is described hereinafter was made to pass through each of the filters (filter-1, filter-2 and the comparative filter).

All the experiments were conducted at top head flow rate of 70 to 100 ml/minute. Dechlorinated water containing around 250 ppm sea salt was used to prepare bacterial and virus challenge suspension. *E. coli* (ATCC 10536) bacteria and *MS-2 Bacteriophage* (ATCC 15597-B1) surrogate virus were used as the test organisms. The test water containing around 10⁷ cfu/100 ml E-coli and 10⁶ mfu/ml MS-2 was passed through filters at an average flow rate of 70 to 100 ml/minute and followed by measuring the amount of E-coli and MS-2 left in water using standard sterile MacConkey's agar medium for E-coli and agar double layer method for MS-2. The log-removal of bacteria and virus was checked over extended period of time by passing more test water.

Table 1 shows the average log-removal provided by the comparative filter. Table 2 shows the removal efficiency (average log reduction) of a block filter containing 29% copper fibres, whereas table 3 shows the removal efficiency in terms of average log reduction of filter with 29% brass fibres.

**Table 1**

| volume of water passed/litres | bacteria | | virus | |
|---|---|---|---|---|
| | input log | average log removal | input log | average log removal |
| 10 | 7.8 | 2.94 | 5.48 | 4.11 |
| 50 | 7.8 | 2.3 | 5.48 | 2.42 |

**Table 2**

| volume of water passed/litres | bacteria | | virus | |
|---|---|---|---|---|
| | input log | average log removal | input log | average log removal |
| 10 | 7.31 | 6.4 | 5.43 | 5.43 |
| 150 | 7.09 | 6.44 | 5.46 | 5.46 |
| 400 | 7.1 | 6.1 | 5.4 | 5.4 |

**Table 3**

| volume of water passed/litres | bacteria | | virus | |
|---|---|---|---|---|
| | input log | average log removal | input log | average log removal |
| 10 | 7.31 | 5.73 | 5.43 | 5.43 |
| 150 | 6.72 | 6.72 | 5.1 | 5.1 |
| 400 | 7.1 | 7.1 | 5.4 | 5.4 |

Comparison of the data in tables 1, 2 and 3 gives an indication of the beneficial technical effects of using brass or copper fibres as compared to filters which are devoid of any fibres.

### Example-4: Comparative performance - fibres v/s particles

In order to compare the technical effect of fibres against particles, a set of moulded filters containing 8% copper fibres were made. Similarly a set of molded filters containing 8% brass fibres was also made. For comparison, a set of molded filters having 8% copper powder (particulate form) was made as well as a set of comparative filters having 8% brass particles. The procedure for making the blocks was as described in Example-1.

All the filters were tested as described earlier. The data is presented in table 4.

**Table 4**

| Data recorded after passing fifty litres of test water | Bacteria | | virus | |
|---|---|---|---|---|
| | input log | average log removal | input log | average log removal |
| copper powder (-40 to +80 mesh, Supplier: Sarda Industrial Enterprises (India), purity = 99.9% copper course grade, irregular shape) | 7.09 | 3.42 | 5.06 | 4.24 |
| copper powder (-50 to +100 mesh) Supplier Sarda Industrial Enterprises (India) purity = 99.9% copper fine grade, irregular shape) | 7.09 | 3.86 | 5.06 | 4.2 |
| brass fibres (-16 to +120 mesh) | 7.04 | 6.64 | 5.64 | 5.3 |
| brass particles 0.5 mm spherical, Supplier: A Ball Creators India 65 % copper and 35 % zinc | 6.71 | 1.68 | 4.66 | 2.5 |

The data in table 4 indicates how copper and brass fibres are superior to copper and brass powder (particulate forms). The data also conclusively proves that even the particle size of copper powder (particles) does not play any significant role in log removal.

The illustrated examples provide that at least some of the problems of prior art can be solved by using fibres of a metal or an alloy having oligodynamic effect rather than particles thereof.

## Claims

1. A filter for purification of water comprising:
(i) a filter medium comprising particulate material; and,
(ii) a metal or an alloy thereof which has oligodynamic effect;
wherein said metal or alloy thereof is in form of fibres and wherein aspect ratio of said fibres is in range of 3:1 to 200:1.

2. A filter as claimed in claim 1 wherein said metal is selected from the group of silver, copper, zinc, gold and aluminium.

3. A filter as claimed in any one of the preceding claims wherein surface of said fibres is serrated.

4. A filter as claimed in any one of the preceding claims wherein ASTM mesh size of said fibres is in range of -10 to +270.

5. A filter as claimed in any one of the preceding claims wherein average length of fibres is in range of 0.1 mm to 10 mm.

6. A filter as claimed in any one of the preceding claims wherein said filter comprises filter medium in range of 1 wt% to 99 wt% and said metal or alloy in range of 99 wt% to 1 wt%.

7. A filter as claimed in any one of the preceding claims wherein said fibres are copper fibres.

8. A filter as claimed in claim 7 wherein apparent density of said copper fibres varies in range of 1.1 g/cm³ to.2.5 g/cm³.

9. A filter as claimed in any one of the preceding claims wherein said alloy is brass or bronze.

10. A filter as claimed in any one of the preceding claims wherein said filter comprises a binder.

11. A filter as claimed in any one of the preceding claims wherein said filter medium is selected from the group of activated carbon, diatomaceous earth, sand, clay, activated alumina and ceramic.

12. A water purification device comprising a filter as claimed in claim 1.

13. A process for preparation of a filter comprising the steps of:
(i) intimately mixing a filter medium comprising particulate material with a metal or an alloy thereof which has oligodynamic effect and which is in form of fibres and aspect ratio of said fibres in the range of 3:1 to 200:1 and a binder to form a mix;
(ii) compacting said mix in a vibratory compactor;
(iii) further compacting said mix in a mould of desired shape and size by applying pressure of not more 20 kg/cm²;
(iv) heating said mould to a selected temperature range; and,
(v) cooling said mould to release filter.

## Patentansprüche

1. Filter zur Reinigung von Wasser, umfassend:
(i) ein Filtermedium, umfassend teilchenförmiges Material, und
(ii) ein Metall oder eine Legierung davon, das (die) einen oligodynamischen Effekt aufweist,
wobei das Metall oder die Legierung davon in Form von Fasern vorliegt und wobei das Aspektverhältnis der Fasern in dem Bereich von 3:1 bis 200:1 liegt.

2. Filter nach Anspruch 1, wobei das Metall unter Silber, Kupfer, Zink, Gold und Aluminium ausgewählt ist.

3. Filter nach irgendeinem der vorhergehenden Ansprüche, wobei die Oberfläche der Fasern gezahnt ist.

4. Filter nach irgendeinem der vorhergehenden Ansprüche, wobei die ASTM-Maschengröße der Fasern in dem Bereich von -10 bis +270 liegt.

5. Filter nach irgendeinem der vorhergehenden Ansprüche, wobei die durchschnittliche Länge der Fasern in dem Bereich von 0,1 mm bis 10 mm liegt.

6. Filter nach irgendeinem der vorhergehenden Ansprüche, wobei der Filter ein Filtermedium in dem Bereich von 1 Gew.-% bis 99 Gew.-% und das Metall oder die Legierung in dem Bereich von 99 Gew.-% bis 1 Gew.-% umfasst.

7. Filter nach irgendeinem der vorhergehenden Ansprüche, wobei die Fasern Kupferfasern sind.

8. Filter nach Anspruch 7, wobei die scheinbare Dichte der Kupferfasern in dem Bereich von 1,1 g/cm³ bis 2,5 g/cm³ variiert.

9. Filter nach irgendeinem der vorhergehenden Ansprüche, wobei die Legierung Messing oder Bronze ist.

10. Filter nach irgendeinem der vorhergehenden Ansprüche, wobei der Filter ein Bindemittel enthält.

11. Filter nach irgendeinem der vorhergehenden Ansprüche, wobei das Filtermedium aus der Gruppe von aktiviertem Kohlenstoff, Diatomeenerde, Sand, Ton, aktiviertem Aluminiumoxid und Keramik ausgewählt ist.

12. Vorrichtung zur Wasserreinigung, umfassend einen Filter nach Anspruch 1.

13. Verfahren zur Herstellung eines Filters, umfassend die Schritte:
(i) inniges Mischen eines Filtermediums, das teilchenförmiges Material enthält, mit einem Metall oder einer Legierung davon, das (die) einen oligodynamischen Effekt aufweist und das (die) in Form von Fasern vorliegt und wobei das Aspektverhältnis der Fasern in dem Bereich von 3:1 bis 200:1 liegt, und einem Bindemittel, um eine Mischung zu bilden,
(ii) Komprimieren der Mischung in einem Rüttelverdichter,
(iii) des Weiteren Komprimieren der Mischung in einer Form der gewünschten Gestalt und Größe durch Anlegen eines Druckes von nicht mehr als 20 kg/cm²,
(iv) Erhitzen der Form auf einen ausgewählten Temperaturbereich und
(v) Abkühlen der Form, um den Filter freizusetzen.

## Revendications

1. Filtre pour purification d'eau comprenant :
(i) un milieu de filtre comprenant un matériau particulaire ; et,
(ii) un métal ou un alliage de celui-ci qui présente un effet oligodynamique ;
dans lequel ledit métal ou alliage de celui-ci est dans une forme de fibres et dans lequel le rapport d'allongement desdites fibres se trouve dans un intervalle de 3:1 à 200:1.

2. Filtre selon la revendication 1, dans lequel ledit métal est choisi dans le groupe d'argent, de cuivre, de zinc, d'or et d'aluminium.

3. Filtre selon l'une quelconque des revendications précédentes, dans lequel la surface desdites fibres est crénelée.

4. Filtre selon l'une quelconque des revendications précédentes, dans lequel l'ouverture de maille ASTM desdites fibres se trouve dans un intervalle de -10 à +270.

5. Filtre selon l'une quelconque des revendications précédentes, dans lequel la longueur moyenne de fibres se trouve dans un intervalle de 0,1 mm à 10 mm.

6. Filtre selon l'une quelconque des revendications précédentes, dans lequel ledit filtre comprend un milieu de filtre dans l'intervalle de 1 % en masse à 99 % en masse et ledit métal ou alliage dans un intervalle de 99 % en masse à 1 % en masse.

7. Filtre selon l'une quelconque des revendications précédentes, dans lequel lesdites fibres sont des fibres de cuivre.

8. Filtre selon la revendication 7, dans lequel la densité apparente desdites fibres de cuivre varie dans un intervalle de 1,1 g/cm³ à 2,5 g/cm³.

9. Filtre selon l'une quelconque des revendications précédentes, dans lequel ledit alliage est du laiton ou du bronze.

10. Filtre selon l'une quelconque des revendications précédentes, dans lequel ledit filtre comprend un liant.

11. Filtre selon l'une quelconque des revendications précédentes, dans lequel ledit milieu de filtre est choisi dans le groupe de charbon actif, de diatomite, de sable, d'argile, d'alumine activée et de céramique.

12. Dispositif de purification d'eau comprenant un filtre selon la revendication 1.

13. Procédé pour préparation d'un filtre comprenant les étapes :
(i) de mélange intime d'un milieu de filtre comprenant un matériau particulaire avec un métal ou un alliage de celui-ci qui présente un effet oligodynamique et lequel est dans une forme de fibres et un rapport d'allongement desdites fibres dans l'intervalle de 3:1 à 200:1 et un liant pour former un mélange ;
(ii) de compactage dudit mélange dans un compacteur à vibrations ;
(iii) de compactage supplémentaire dudit mélange dans un moule de forme et de taille souhaitées par application de pression d'au plus 20 kg/cm³ ;
(iv) de chauffage dudit moule dans un intervalle de température choisi ; et,
(v) de refroidissement dudit moule pour libérer le filtre.
